# EUROPÄISCHE PATENTSCHRIFT

(11) **EP 0 472 056 B1**
(45) Veröffentlichungstag und Bekanntmachung des Hinweises auf die Patenterteilung: **09.11.1994**
(21) Anmeldenummer: 91113300.7
(22) Anmeldetag: 08.08.1991
(51) Int. Cl.: F16L 47/04, F24D 3/10, F16L 15/04

(54) **Verbindungselement für Rohre**
Jointing element for pipes
Element de raccord pour tuyaux

(30) Priorität: 21.08.1990 DE 4026411; 16.04.1991 DE 4112369
(43) Veröffentlichungstag der Anmeldung: 26.02.1992
(73) Patentinhaber: Thermconcept Produkte für Heizung und Sanitär GmbH & Co., D-48282 Emsdetten (DE)
(72) Erfinder: Fehlings, Thomas, W-4407 Emsdetten (DE)
(74) Vertreter: Habbel, Hans-Georg, Dipl.-Ing.

(56) Entgegenhaltungen:
- AT-B- 388 605
- DE-A- 2 240 548
- FR-A- 2 407 419

## Beschreibung

Die Erfindung bezieht sich auf ein Verbindungselement für Rohre nach dem Oberbegriff des Anspruchs 1, wie beispielsweise aus der FR-A1 24 07 419 bekannt. Derartige Verbindungselemente werden beispielsweise im Bereich von Kalt- und Warmwasserleitungen und im Bereich von Fußbodenheizungen verwendet.

Die bekannten Verbindungselemente sind häufig dreiteilig und weisen erstens eine Stützhülse auf, auf die das Rohrende aufgesteckt wird, wobei anschließend als zweites Teil eine Überwurfmutter festgezogen wird, die das Rohrende gegen eine Klemmfläche an einem dritten Teil (Anschlußnippel) quetscht und so die Abdichtung zwischen Rohr und Verbindungselement erzielen soll.

Nachteilig bei den bekannten Verbindungselementen ist einerseits, daß sie zum größten Teil aus Metall gefertigt werden müssen oder metallische Teile aufweisen müssen, um eine genügende Festigkeit für die Abdichtung zwischen Rohr und Verbindungselement aufzuweisen.

Die metallischen Werkstoffe genügen nämlich oft den Anforderungen nicht, die an die chemische Beständigkeit, insbesondere in Sondereinsatzbereichen, gestellt werden. Zudem wird durch die Quetschung mit Hilfe der Überwurfmutter oft eine Verletzung des Rohrendes bewirkt. Insbesondere beim starken Festziehen der Überwurfsmutter, welches eine besonders gute Dichtigkeit erzielen soll, wird die Undichtigkeit aufgrund der Verletzung des Rohrs bzw. Rohrendes oft ungewollt bewirkt. Schließlich sind die metallischen Teile aus Messing oder Rotguß relativ teuer.

Nachteilig ist zweitens die aufwendige Konstruktion mit mehreren Teilen. Zu den drei erwähnten Bauteilen kommen zwangsläufig noch mehr hinzu, denn die Dichtigkeit der bekannten Verbindungselemente kann nur mit Hilfe von zusätzlichen Dichtungselementen erzielt werden, wie beispielsweise mit Flachdichtungen oder mit Dichtungsringen in Form von Gummi- oder Kunststoffringen.

Insbesondere die häufig verwendeten Gummi- oder Kunststoffringe sind als dritter Nachteil der bekannten Verbindungselemente gegenüber mechanischen Verletzungen sehr empfindlich, so daß während der Montage die Verletzung eines solchen Ringes durch Quetschung leicht erfolgen und damit die Dichtigkeit der gesamten Verbindung in Frage stellen kann.

Ein vierter Nachteil der bekannten Verbindungselemente besteht darin, daß die erforderlichen Quetschkräfte nur mit Hilfe von Werkzeugen aufgebracht werden können. Eine werkzeuglose Montage ist mit Hilfe der bekannten Verbindungselemente daher nicht möglich.

Weiterhin ist aus der DE 28 49 780 eine Verbindung von Rohren bekannt, die durchgängig aus Kunststoff bestehen und ein männliches und ein weibliches Ende aufweisen. Die Verbindung zweier Rohre erfolgt dabei unmittelbar durch die Rohre selbst, so daß das Verbindungselement durch das Rohr selbst ausgebildet wird. Auch bei dieser Verbindung sind Gummiringe oder Dichtungsringe aus ähnlichem Material für die Dichtigkeit der Verbindung erforderlich. Eine werkzeuglose Montage soll bei dieser Verbindungsart möglich sein.

Allgemein hat sich gezeigt, daß die Verbindung über zwei Gewindegänge, beispielsweise durch die beiden Gewindegänge zweiter metallischer Verbindungskörper, oder eines metallischen und eine Kunststoffkörpers, oder zweier Kunststoffkörper nie eine ausreichende Dichtigkeit bietet, wie sie für die Zulassungsprüfungen beispielsweise im Bereich der Verwendung für Fußbodenheizungen erforderlich ist.

Der Erfindung liegt die Aufgabe zugrunde, ein Verbindungselement für Rohre zu schaffen, welches eine ausreichend dichte Verbindung ohne die Verwendung zusätzlicher Dichtungselemente schafft, und zwar auch dann, wenn das Verbindungselement ausschließlich aus Kunststoff besteht, und welches bei preisgünstiger Herstellung eine schnelle und einfache Montage ggf. ohne die Verwendung von Werkzeugen ermöglicht.

Diese der Erfindung zugrundeliegende Aufgabe wird gelöst durch eine Ausbildung eines gattungsgemäßen Verbindungselementes gemäß dem kennzeichnenden Teil des Anspruchs 1.

Mit anderen Worten: Die Erfindung schlägt vor, die Dichtungselemente materialeinheitlich aus dem Körper des Verbindungselementes zu bilden, wobei dies in Form von Vorsprüngen erfolgt, welche in die Oberfläche des Rohres eindrücken oder einschneiden. Die bekannten Verbindungstechniken beruhen in ihrer Dichtwirkung jeweils auf Quetschkräften. Zu diesem Zweck wird entweder eine Gummidichtung verwendet, die gequetscht wird und die verletzungsanfällig ist. In anderen Fällen wird das Rohr selbst gequetscht innerhalb eines dreiteiligen metallischen Beschlages.

Überraschend hat sich gezeigt, daß durch das Eindrücken oder Einschneiden eines Dichtungsvorsprungs in die Kunststoffoberfläche eines Rohrs eine hervorragende Dichtung für verschiedenste Temperaturen, Temperaturwechsel und für lange Standzeiten
gewährleistet werden kann. Die Dichtungsvorsprünge sind dabei in Form eines Gewindes ausgebildet, welches die Kunststoffoberfläche des Rohres beaufschlagt. Hierdurch wird eine werkzeuglose Montage des Verbindungselementes ermöglicht. Das erfindungsgemäße Verbindungselement ist sowohl mit
Rohren aus Vollkunststoff verwendbar als auch mit Mehrschichtrohren, die z. B. im Inneren eine metallische Folie oder einen metallischen Rohrkern aufweisen und sowohl zur Innenseite als auch zur Außenseite des Rohres mit Kunststoff beschichtet sind.

Weitere vorteilhafte Ausgestaltungen der erfindungsgemäßen Vorrichtung sind in den Unteransprüchen beschrieben.

Ausführungsbeispiele eines erfindungsgemäßen Verbindungselementes werden anhand der Zeichnungen näher erläutert. Dabei zeigt
- Fig. 1: schematisch einen Verteiler, an den mehrere Rohre angeschlossen werden können,
- Fig. 2 bis 4: nicht erfindungsgemäße Verbindungselemente mit verschiedenen Innengewinden und
- Fig. 5: ein nicht erfindungsgemäßes Verbindungselement, welches über ein Außengewinde mit dem Verteiler aus Fig. 1 verbunden wird,
- Fig. 6: schematisch den Bereich des hülsenförmigen Abschnittes eines erfindungsgemäßen Ausführungsbeispiels mit angeformter Stützhülse und
- Fig. 7: eine schematische Darstellung ähnlich Fig. 6, wobei mit diesem Ausführungsbeispiel eine selbsttätige Rohraufweitung erzielbar ist.

In den Zeichnungen ist mit 1 ein Verteiler bezeichnet, der drei Anschlußstutzen 2 aufweist. An die Anschlußstutzen 2 können flexible Anschlüsse, nämlich Rohre, Schlauchleitungen od. dgl. angeschlossen werden. Der Verteiler besteht in dem dargestellten Ausführungsbeispiel aus einem Thermoplast, welches mit gleichartigen Thermoplasten verschweißt werden kann.

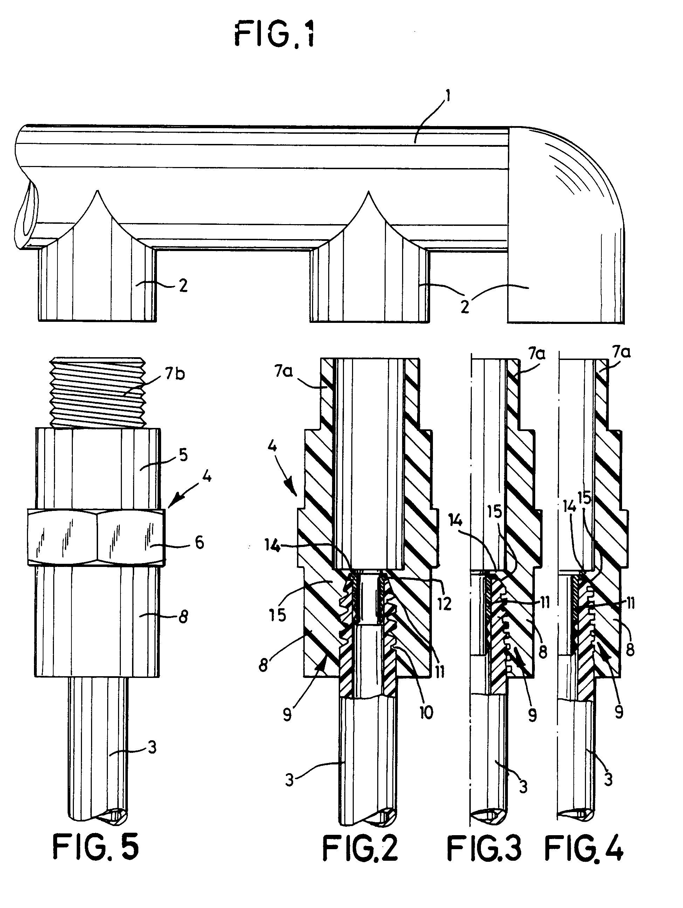

In den Fig. 2 bis 5 sind flexible Anschlüsse in Form von Rohren 3 dargestellt, die beispielsweise aus VPE-Kunststoff bestehen und die mit dem Thermoplast des Verteilers 1 nicht verschweißt werden können. Aus diesem Grunde werden die Rohre 3 mit dem Verteiler 1 über Verbindungselemente 4 verbunden. Die Verbindungselemente 4 umfassen dabei einen Stützkörper 5, der eine Sechskantmutter 6 trägt, wobei die Sechskantmutter 6 materialeinheitlich an den Stützkörper 5 angeformt sein kann.

Weiterhin bestehen die Verbindungselemente 4 aus einem Verbindungsnippel 7, der in den Fig. 2 bis 4 als Verbindungsnippel 7a eine glatte Außenfläche aufweist, mit der er in den Anschlußstutzen 2 des Verteilers 1 eingesetzt und mit diesem verschweißt werden kann. Der Verbindungsnippel 7b aus Fig. 5 weist dagegen ein Außengewinde auf, mit dem er in einen entsprechenden Übergang für einen Anschluß eingeschraubt werden kann.

Schließlich weisen die Verbindungselemente 4 einen hülsenförmigen Abschnitt 8 auf, in den das jeweilige Rohr 3 eingesetzt wird. Die Abdichtung erfolgt dabei über Dichtungsvorsprünge in Form eines Innengewindes 9, welches beispielsweise gemäß Fig. 2 mit trapezförmigen Querschnitten der Gewindegänge versehen sein kann, so daß sich das Innengewinde in Fig. 2 mit seinem ersten Gang in das Rohr 3 einpreßt.

In Abwandlung von Fig. 2 weist das Innengewinde 9 in den Fig. 3 und 4 Gewindegänge mit rechteckigem Querschnitt auf. Wie bei dem in Fig. 2 dargstellten Gewinde 9 mit einer angeschrägten Fläche 10 des untersten Gewindegangs kann auch ein Gewindegang mit rechteckigem Querschnitt eine solche schräge Fläche 10 aufweisen zum Einführen des Rohrs in das Gewinde; die Gewindegänge können jedoch auch entsprechend Fig. 3 und 4 verlaufen.

Eine separate Stützhülse 11 wird vor der Montage des Rohrs 3 in dessen Ende eingesetzt, bis ein Kragen 12 der Stützhülse 11 an diesem Ende anliegt. Das Rohr 3 wird dnn in den hülsenförmigen Abschnitt 8 des Verbindungselementes eingesteckt und in das Innengewinde 9 gedreht, oder es wird das Verbindungselement 4 auf das Rohr 3 aufgedreht, bis die Stützhülse 11 mit ihrem Kragen 12 an einem innen im Verbindungselement 4 umlaufenden Flansch 14 anliegt. Dabei wird die vorderste Kante des Rohrs 3 an eine konische Ringfläche 15 gequetscht.

Wenn alle dargestellten Bauteile aus Kunststoff bestehen, ist die hergestellte Verbindung auch im Bereich von Sonderwässern mit besonderer chemischer Aggressivität verwendbar.

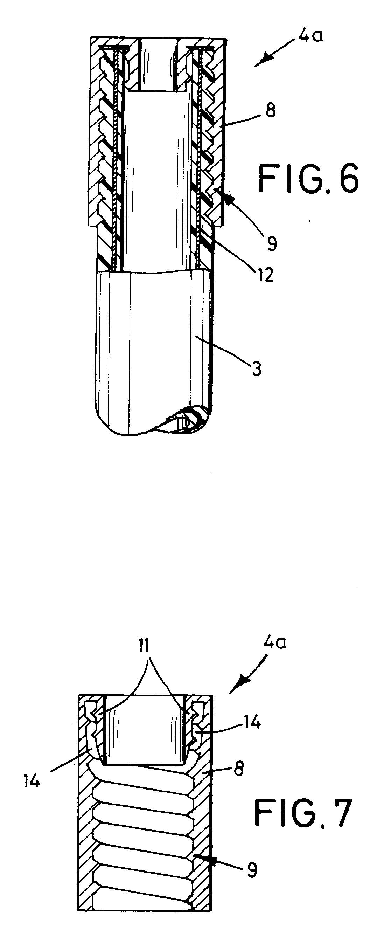

Wie in den Fig. 6 und 7 dargestellt, wird durch die Anordnung von Dichtungsvorsprüngen an den fest im Inneren des Verbindungselementes angeordneten Stützhülsen 11 eine besondere Dichtigkeit des Verbindungselementes gewährleistet. Insbesondere in der Verbindung mit Mehrschichtrohren, die einen metallischen Kern 12 aufweisen, wird so schon eine Dichtigkeit zwischen dem wasserführenden Innenraum des Rohrs 3 und der Stützhülse 11 geschaffen. Ein Freiraum 14 zwischen dem hülsenförmigen Abschnitt 8 und der Stützhülse 11 wird durch das Rohr 3 soweit ausgefüllt, daß das Rohr sowohl innen als auch außen durch die Dichtungsvorsprünge abgedichtet wird. So kann das Wasser nicht bis zur Stirnseite des Rohrs 3 gelangen, an der Grenzfläche zwischen Metall und Kunststoff von der Stirnseite aus in das Rohr 3 einwandern, und schließlich Korrosionserscheinungen am metallischen Kern 12 verursachen.

Die in Fig. 7 dargestellte Stützhülse 11 weist nahezu den gleichen Innendurchmesser auf wie ein im hülsenförmigen Abschnitt 8 verlaufendes Rohr 3. Der freie Leitungsquerschnitt bleibt auf diese Weise erhalten. Dies wird dadurch erreicht, daß der Freiraum 14 zwischen der Stützhülse 11 und dem hülsenförmigen Abschnitt 8 sich erweitert, so daß das Rohr 3 automatisch aufgeweitet wird, wenn es in den Abschnitt 8 eingeschraubt wird.

Auch ohne den konischen Anschlag, also ohne die Herstellung einer Quetschdichtung dichten die beiden in den Fig. 6 und 7 dargestellten Ausführungsbeispiele ein Rohr gegenüber dem Verbindungselement sicher ab.

Die in Fig. 6 und 7 dargestellten Ausführungsbeispiele können entweder direkt als Verbindungselement 4a in einen Verteiler wie den Verteiler 1 eingeklebt werden, wobei in diesem Fall die Verbindungselemente 4a nahezu ausschließlich aus dem hülsenförmigen Abschnitt 8 bestehen. Die dargestellten hülsenförmigen Abschnitte 8 können jedoch ebenfalls lediglich ein Teil eines größeren gesamten Verbindungselementes 4 wie in den Fig. 2 bis 5 sein.

Eine ausreichende Dichtung wird bei allen vorgeschlagenen Verbindungselementen auch dann erzielt, wenn sie ausschließlich aus Kunststoff bestehen und keine weiteren Dichtungselemente wie Gummiringe o. dgl. aufweisen. Die vorgestellten Verbindungselemente können jedoch auch aus Metall bestehen, da auch ein in die Kunststoffrohroberfläche eingeschnittenes Metallgewinde eine ausreichend gute Dichtigkeit erzielt. Überraschend wurde diese gute Dichtigkeit für die Kombination eines Gewindes einerseits und einer glatten, nicht mit einem Gewinde versehenen Kunststoffoberfläche andererseits ermittelt.

Die Handhabung des vorgeschlagenen Verbindungselementes ist einfach, da lediglich das Rohr in den hülsenförmigen Abschnitt des Verbindungselementes eingeschraubt wird. Dies kann auch von Hand erfolgen, da die erforderlichen Kräfte ausreichend gering sind. Dennoch wird eine dichte Verbindung erzielt. Auf diese Weise ist eine schnelle und einfache Montage ohne die Verwendung von Werkzeugen möglich.

Insbesondere in Verbindung mit den erwähnten Mehrschichtrohren kann die Verlegung und der Anschluß der Rohrleitungen auf einfache Weise erfolgen, da die Mehrschichtrohre zum Teil einen Metallkern von so großer Dicke aufweisen, daß sie zwar von Hand gebogen werden können, dann aber durch die Steifheit des Metallkerns formstabil bleiben und so in den gewünschten Windungen verbleiben, die von Hand gebogen wurden.

## Patentansprüche

1. Verbindungselement für Rohre mit einem hülsenförmigen Abschnitt zur Aufnahme des Rohrendes, wobei dieser Abschnitt angeformte Dichtungsvorsprünge aufweist, und mit einer im Inneren des hülsenförmigen Abschnittes (8) angeordneten Stützhülse (11) für das Rohr, dadurch gekennzeichnet, daß die Stützhülse (11) an den hülsenförmigen Abschnitt (8) einstückig angeformt ist, daß auch an der Stützhülse Dichtungsvorsprünge angeordnet sind, und daß die Dichtungsvorsprünge am hülsenförmigen Abschnitt (8) und/oder an der Stützhülse (11) in Gewindeform verlaufen.

2. Verbindungselement nach Anspruch 1, dadurch gekennzeichnet, daß die Dichtungsvorsprünge mit einer Schneidkante versehen sind.

3. Verbindungselement nach Anspruch 1 oder 2, gekennzeichnet durch ein Gewinde (9), dessen Gewindegänge einen im wesentlichen trapezförmigen Querschnitt aufweisen.

4. Verbindungselement nach Anspruch 1 oder 2, gekennzeichnet durch ein Gewinde (9), dessen Gewindegänge einen im wesentlichen rechteckigen Querschnitt aufweisen.

5. Verbindungselement nach einem der Ansprüche 1 bis 4, gekennzeichnet durch ein Gewinde (9), dessen äußerster Gewindegang eine angeschrägte Fläche (10) aufweist, die von einem weiteren freien Durchmesser im äußeren Bereich des hülsenförmigen Abschnitts (8) zu einem geringeren freien Durchmesser tiefer im hülsenförmigen Abschnitt (8) verläuft.

6. Verbindungselement nach einem der vorhergehenden Ansprüche, gekennzeichnet durch ein Gewinde (9), dessen äußerster Gewindegang einen größeren freien Durchmesser aufweist als ein weiter innen im hülsenförmigen Abschnitt (8) angeordneter Gewindegang.

7. Verbindungselement nach einem der vorhergehenden Ansprüche, dadurch gekennzeichnet, daß sich der Durchmesser des Freiraums (14) zwischen der Stützhülse (11) und dem hülsenförmigen Abschnitt (8) erweitert, wobei der Innendurchmesser der Stützhülse (11) im wesentlichen dem Innendurchmesser des Rohrs (3) entspricht.

8. Verbindungselement nach einem der vorhergehenden Ansprüche, gekennzeichnet durch einen Verbindungsnippel (7a) mit glatter Außenfläche.

## Claims

1. A connecting member for pipes with a sleeve-form portion for accommodating the pipe end, this portion comprising formed-on sealing projections, and with a supporting sleeve (11) for the pipe arranged inside the sleeve-form portion (8), characterized in that the supporting sleeve (11) is formed onto the sleeve-form portion (8) in one piece, in that sealing projections are also arranged on the supporting sleeve and in that the sealing projections run in the manner of a screw thread on the sleeve-form portion (8) and/or on the supporting sleeve (11).

2. A connecting member according to claim 1, characterized in that the sealing projections are provided with a cutting edge.

3. A connecting member according to claim 1 or claim 2, characterized by a thread (9), whose turns comprise a substantially trapezoidal cross-section.

4. A connecting member according to claim 1 or claim 2, characterized by a thread (9) whose turns comprise a substantially rectangular cross-section.

5. A connecting member according to any one of claims 1 to 4, characterized by a thread (9), whose outermost turn comprises a sloping face (10), which runs from a broader free diameter in the outer area of the sleeve-form portion (8) to a lesser free diameter deeper in the sleeve-form portion (8).

6. A connecting member according to any one of the preceding claims, characterized by a thread (9) whose outermost turn comprises a larger free diameter than a turn arranged further inside the sleeve-form portion (8).

7. A connecting member according to any one of the preceding claims, characterized in that the diameter of the free space (14) widens between the supporting sleeve (11) and the sleeve-form portion (8), the inner diameter of the supporting sleeve (11) corresponding substantially to the internal diameter of the pipe (3).

8. A connecting member according to any one the preceding claims, characterized by a connecting nipple (7a) with a smooth outer surface.

## Revendications

1. Elément de raccord pour tuyau ayant une portion en forme de douille pour la réception de l'extrémité du tuyau, ladite portion présentant des saillies d'étanchéité moulées, et une douille d'appui (11) disposée à l'intérieur de la portion (8) en forme de douille pour le tuyau, caractérisé en ce que la douille d'appui (11) est moulée d'un seul tenant sur la portion (8) en forme de douille, en ce que des saillies d'étanchéité sont aussi disposées sur la douille d'appui, et en ce que les saillies d'étanchéité s'étendent sur la portion (8) en forme de douille et/ou sur la douille d'appui (11) sous la forme de filets.

2. Elément de raccord selon la revendication 1, caractérisé en ce que les saillies d'étanchéité sont pourvues d'une arête coupante.

3. Elément de raccord selon la revendication 1 ou 2, caractérisé en ce qu'il comporte un filetage (9), dont les filets présentent une section sensiblement trapézoïdale.

4. Elément de raccord selon la revendication 1 ou 2, caractérisé en ce qu'il comporte un filetage (9) dont les filets présentent une section sensiblement rectangulaire.

5. Elément de raccord selon l'une ou l'ensemble des revendications 1 à 4, caractérisé en ce qu'il comporte un filetage (9) dont le tour extérieur présente une surface (10) biseautée, qui s'étend depuis un diamètre libre large dans la zone extérieure de la portion (8) en forme de douille jusqu'à un diamètre libre plus réduit dans la portion (8) en forme de douille.

6. Elément de raccord selon l'une ou l'ensemble des revendications précédentes, caractérisé en ce qu'il comporte un filetage (9) dont le tour extérieur présente un diamètre libre plus grand qu'un tour de filet disposé plus à l'intérieur dans la portion (8) en forme de douille.

7. Elément de raccord selon l'une ou l'ensemble des revendications précédentes, caractérisé en ce que le diamètre de l'espace libre (14) entre la douille d'appui (11) et la portion (8) en forme de douille s'élargit, le diamètre intérieur de la douille d'appui (11) correspondant sensiblement au diamètre intérieur du tuyau (3).

8. Elément de raccord selon l'une ou l'ensemble des revendications précédentes, caractérisé en ce qu'il comporte un manchon de raccordement (7a) à surface extérieure lisse.
